**Europäisches Patentamt**

**European Patent Office**

**Office européen des brevets**

(19)

(11) Veröffentlichungsnummer: **0 063 645**
**B1**

(12) # EUROPÄISCHE PATENTSCHRIFT

(45) Veröffentlichungstag der Patentschrift:
09.04.86

(51) Int. Cl.⁴: **G 01 K 7/18**

(21) Anmeldenummer: **81110339.9**

(22) Anmeldetag: **11.12.81**

(54) Schneller Temperatursensor für eine Brennkraftmaschine.

(30) Priorität: **26.03.81 DE 3111948**

(43) Veröffentlichungstag der Anmeldung:
**03.11.82 Patentblatt 82/44**

(45) Bekanntmachung des Hinweises auf die Patenterteilung:
**09.04.86 Patentblatt 86/15**

(84) Benannte Vertragsstaaten:
**DE FR GB IT NL**

(56) Entgegenhaltungen:
EP - A - 0 019 135
FR - A - 2 142 027
FR - A - 2 470 370
GB - A - 2 049 933
US - A - 4 029 472

NAVY TECHNICAL DISCLOSURE BULLETIN, Band 5, Nr. 10, Oktober 1980, Seiten 45-46, Arlington, Va., USA J.L. Abita: "Microanemometer or resistance probe"

(73) Patentinhaber: **ROBERT BOSCH GMBH, Postfach 50, D-7000 Stuttgart 1 (DE)**

(72) Erfinder: **Gruner, Heiko, Dr. Dipl.-Phys., Nanetteweg 30, D-7016 Gerlingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung geht aus von einem schnellen Temperatursensor zur Erfassung der Ansauglufttemperatur einer Brennkraftmaschine nach der Gattung des Patentanspruchs. Ein derartiger Temperatursensor ist aus der EP-A-0 019 135 bekannt. Bei ihm ist auf einem dünnen Isolierstoffträger ein Schichtsystem aus Widerstandsmaterial mit einer Widerstands-Mäanderfläche und mit Anschlußbahnen aufgebracht. Diese Widerstands-Mäanderfläche ist von einer, die Kontaktierungsstellen des Widerstands nicht bedeckenden Schutzschicht abgedeckt. Die Halterung selbst überlappt die Schutzschicht. Die Kontaktierungsstellen sind ungeschützt in der Halterung angeordnet. Eventuell in diesen Freiraum eindringende Feuchtigkeit kann somit ungehindert die Kontaktierungsstellen angreifen. Ferner hat die Halterung eine große Wärmekapazität, die bei sich ändernder Temperatur des strömenden Mediums zu einer verzögerten Temperaturmessung führen kann.

Aus der FR-A-2 142 027 ist es bekannt, bei einem Temperatursensor den temperaturabhängigen Meßwiderstand in ein aus zwei Teilen zusammengesetztes Gehäuse einzubauen, wobei ein Teil eingespritzte Anschlußzungen enthält, mit denen die zum Meßwiderstand führenden Zuleitungen verbunden sind.

Weiterhin ist aus der GB-A-2 049 933 bekannt, den Temperatursensor auf einem dünnen Isolierplättchen anzuordnen. Dieser ist aber von keiner Schutzschicht umgeben. Eine Meßsonde mit einem ungeschützten Widerstand, der in direktem Kontakt mit dem strömenden Medium steht, hat neben der mechanischen und korrosiven Anfälligkeit den Nachteil, daß durch eventuelle elektrische Leitfähigkeit des strömenden Druckmittels zusätzliche Meßfehler hervorgerufen werden können.

Schließlich ist der US-A-4 029 472 zu entnehmen, auf einem dünnen Isolierstoffplättchen zwei sich überlappende Widerstandsschichten aus verschiedenen Materialien anzuordnen, um so eine thermoelementartige Verbindung der beiden verschiedenen Widerstände zu erlangen.

Wenn bei einer Brennkraftmaschine die Kraftstoffzufuhr in Abhängigkeit von der Ansauglufttemperatur zugemessen werden soll, liegen die Aufgaben vor, daß der zur Erfassung der Ansauglufttemperatur dienende Temperatursensor den jeweiligen Temperaturänderungen sehr schnell zu folgen vermag. Er darf demgemäß nur eine geringe Wärmekapazität aufweisen; seine thermische Kopplung mit der Halterung muß so ausgeführt werden, daß sie praktisch ohne Einfluß auf die Ansprechgeschwindigkeit des Sensors bleibt. Der zu messenden Ansaugluft muß ein strömungsgünstiger Zugang zum Meßwiderstand ermöglicht werden, wobei aber gleichzeitig der Meßwiderstand vor mechanischer Zerstörung geschützt sein muß. Der Meßwiderstand und seine Kontaktierung müssen gegen Korrosion geschützt sein. Dabei besteht die Schwierigkeit, daß der Meßwiderstand von einer möglichst dünnen Schutzschicht abgedeckt sein soll, um die Ansprechgeschwindigkeit des Sensors praktisch nicht zu beeinflussen. Diese dünnen Widerstandsabdeckungen reichen dann aber nicht aus, um auch an der Lotkontaktierung, nämlich am Übergang von der Widerstandsschicht zur Lotschicht eine hermetische Schutzschicht auszubilden.

Diese Aufgaben werden bei einem Temperatursensor der eingangs genannten Art durch die im Patentanspruch gekennzeichneten Merkmale gelöst. Der Abstand der Kontaktierungsstellen von der Widerstands-Mäanderfläche ist aus zwei Gründen so ausgeführt: Erstens wird so ermöglicht, daß der Widerstands-Mäander und die Kontaktierungsstellen von zwei unterschiedlichen Abdeckschichten gegen korrosiven Angriff geschützt werden und ein genügend langer Zwischenbereich vorhanden ist, in dem sich die beiden Schutzschichten überlappen können. So ist es möglich, ein Vordringen von Feuchtigkeit entlang der Überlappungsfläche zu verhindern.

Zweitens kann der Teil des Isolierstoffplättchens, welcher die Kontaktierungen trägt, zur mechanisch stabilen Halterung des Plättchens so mit dem Gehäuse verbunden werden, daß die Anbindungslinie der Halterung wenigstens mehr als die Hälfte der Widerständs-Mäanderflächenlänge vom Widerstands-Mäander entfernt ist. Eine Beeinflussung der Ansprechgeschwindigkeit des Sensors durch die thermische Kopplung des Meßwider-standes mit der Halterung ist so vernachlässigbar klein.

Die Erfindung ist nachstehend anhand eines Ausführungsbeispieles näher beschrieben und erläutert, das in der Zeichnung dargestellt ist.

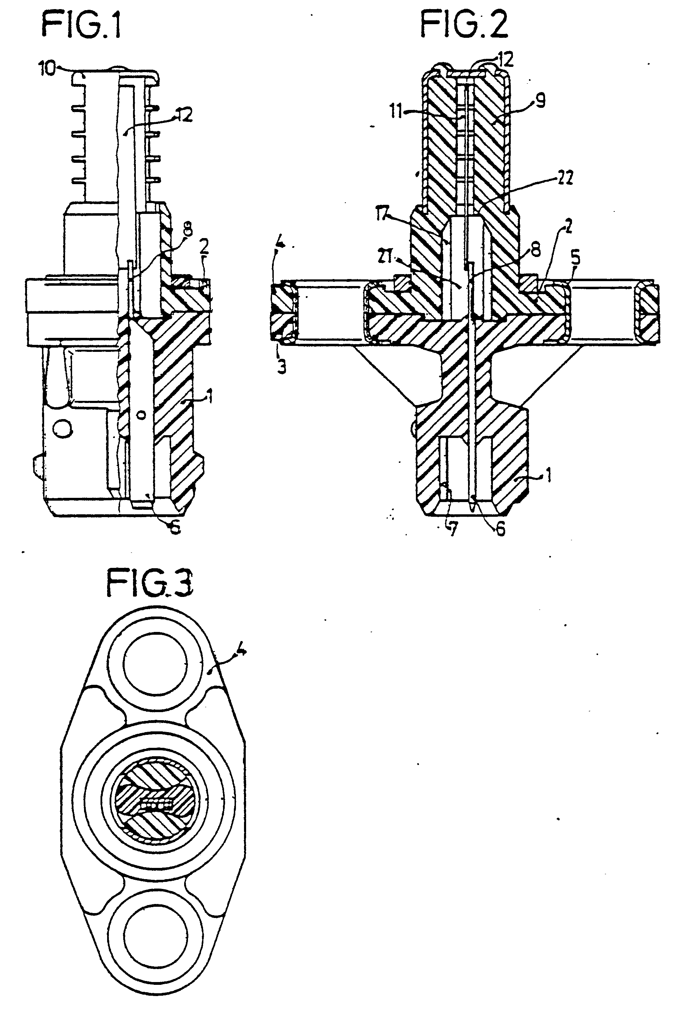

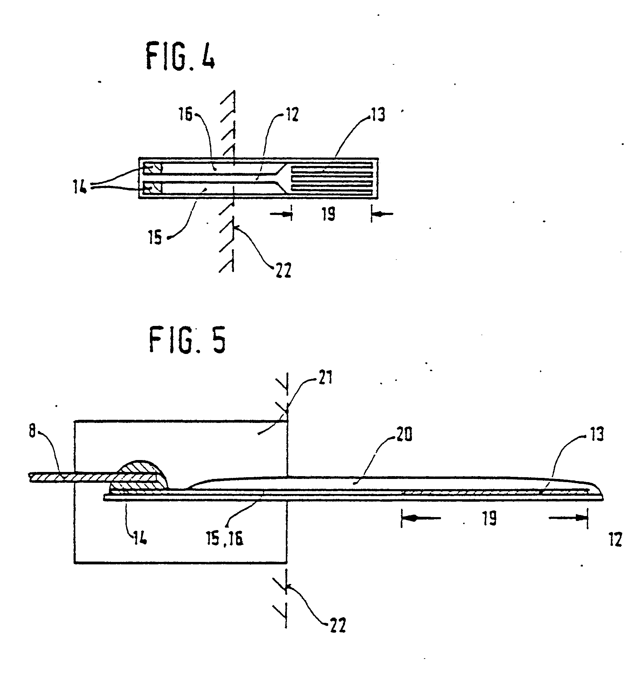

Es zeigen: Figur 1 einen Temperatursensor, zur Hälfte in der Seitenansicht und zur anderen Hälfte in seinem axialen Längsschnitt, Figur 2 in einem gegenüber Figur 1 um 90° versetzten Längsschnitt, Figur 3 in axialer Draufsicht, Figur 4 ein als Träger eines temperaturabhängigen Widerstandes dienendes Isolierstoffplättchen des Sensors in Draufsicht und Figur 5 das eingebettete Isolierstoffplättchen mit den überlappenden Schutzschichten in der Ansicht von der Seite und vergrößertem Maßstab mit nicht maßstabgerechten Schichtdicken.

Der dargestellte Temperatursensor ist zum Einbau in en nicht wiedergegebenes Ansaugrohr einer Brennkraftmaschine bestimmt und soll im Temperaturbereich von −40° bis 180°C arbeiten. Er weist ein aus duroplastischem Kunststoff spritzgepreßtes Gehäuse auf, welches aus einem Unterteil 1 und einem Oberteil 2 besteht. Beide Teile haben einen verbreiterten Flansch 3 bzw. 4, an welchem sie mit zwei durchgehenden Hohlnieten 5 miteinander verbunden sind.

Das Unterteil 1 enthält zwei mit Kunststoff umspritzte Steckerzungen 6, die an ihrem unteren Endabschnitt in eine zur Aufnahme einer nicht dargestellten Anschluß-buchse dienende Aussparung 7 hineinragen und an ihrem oberen Endabschnitt jeweils zu einer flachen Anschlußfahne 8 flachgepreßt sind..

Das Oberteil weist zwei im Abstand voneinander angeordnete Tragsäulen 9 auf, über welche eine aus Blech hergestellte Schutzkappe 10 greift. Die beiden Tragsäulen 9 sind so gestaltet, daß die am Widerstand vorbeiströmende Luft im Bereich des Meßwiderstandes ihre Strömungsgeschwindigkeit weiter erhöht und so die Ansprechgeschwindigkeit des Sensors gesteigert wird. In der Schutzkappe 10 sind ausgestanzte Fenster 11 angeordnet, welche der Ansaugluft Zugang zu einem in Figur 4 im einzelnen näher dargestellten Isolierstoffplättchen 12 erlauben, das etwa 0,25 mm stark und aus Keramik (Al $O_2$) hergestellt ist. Anstelle der Schutzkappe 10 können auch einzelne Metallringe die mechanische Schutzfunktion des Sensors übernehmen, welche an denjenigen Stellen auf den Tragsäulen 9 aufliegen, an denen die Stege der Schutzkappe nach Ausstanzen der Fenster positioniert sind.

Im Ausführungsbeispiel besteht die eigentliche temperaturabhängige Schicht auf dem Isolierstoffplättchen 12 aus einer aufgestäubten TaNi-Schicht, deren Flächenwiderstand 0,47 Ω ± 10 % beträgt, was einer Schichtdicke von etwa 0,3 µm entspricht. Bei der gewählten TaNi-Widerstandslänge und der TaNi-Bandbreite von 75 µm ergibt sich ein Meßwiderstand von 1 k Ω zwischen den beiden Anschlußleitungen 15 und 16, die anbeiden längsseiten des Isolierstoffplättchens 12 ebenfalls in Dünnschichttechnik angebracht und mit den beiden Anschluß-fahnen der Zungen 6 verlötet sind. Im Bereich dieser Leiterbahnen 15, 16 und deren Verbindungszonen mit den Anschlußfahnen 8 ist das Oberteil 2 an seiner Aussparung 17 mit einer Vergußmasse 21 ausgegossen, welche gleichzeitig das Isolierstoffplättchen 12 mit dem Gehäuse fest verbindet und eine Korrosionsschutzschicht für die Lötkontakte darstellt. Da die beiden Schutzschichten 20 und 21 stoffverträglich sein müssen, um an der Überlappungsfläche ein Eindringen der Feuchtigkeit wirklich zu verhindern, wird für den Fall, daß die Widerstands-Mäander-Abdeckung 20 ein Epoxidharz darstellt, für die Verguß-und Schutzschichtmasse 21 ein Epoxidharz mit einem zu 70 % aus Titanoxid und einem Aminhärter bestehenden Füllmittel benützt.

**Patentanspruch:**

1. Schneller Temperatursensor zur Erfassung der Ansauglufttemperatur einer Brennkraftmaschine, insbesondere einer aufgeladenen Brennkraftmaschine, mit einem auf einem dünnen Isolierstoffplättchen (12), bevorzugt in Dünnschichttechnik, aufgebrachten temperaturabhängigen, als eine Widerstands-Mäanderfläche (13) ausgeführten Widerstand, wobei die Kontaktierungsstellen (14) über ebenfalls auf dem Isolierstoffplättchen (12) angeordnete Leiterbahnen (15, 16) mit der Widerstands-Mäanderfläche (13) verbunden sind und die Widerstands-Mäanderfläche (13) und teilweise die Leiterbahnen (15, 16) mit einer die Kontaktierungsstellen (14) nicht überdeckenden ersten (Schutzschicht (20) abgedeckt sind, wobei die Kontaktierungsstellen (14) von einer Halterung (21), die zur mechanischen Befestigung des Isolierstoffplättchens (12) in dem Gehäuse des Temperatorsensors dient, abgedeckt sind, wobei sich die Schutzchicht (20) und die Halterung (21) im Breich zwischen den Kontaktierungsstellen (14) und der Widerstands-Mäanderfläche (13) überlappen und wobei die der Widerstands-Mäanderfläche (13) zugewandte Begrenzungskante (22) der Halterung (21) wenigstens um die Hälfte der Länge (19) der Widerstands-Mäanderfläche (13) von dieser Widerstands-Mäanderfläche (13) entfernt ist, dadurch gekennzeichnet, daß die Kontaktierungsstellen (14). von der Widerstands-Mäanderfläche (13) um mehr als die Länge der Widerstands-Mäanderfläche (13) entfernt sind, daß die Halterung (21) aus einer zweiten, zur ersten unterschiedlichen Schutzschicht besteht, in die die Kontaktierungsstellen (14) eingebettet sind,daß der temperaturabhängige Widerstand auf dem Isolierstoffplättchen (12) in ein aus zwei Teilen zusammengesetztes Isolierstoffgehäuse (1, 2) eingebaut ist und daß eines der beiden Teile eingespritzte Anschluß-zungen (6) enthält, mit denen die Leiterbahnen (15, 16) an den Kontaktierungsstellen (14) verlötet sind.

**Claims:**

1. High-speed temperature sensor for detecting the intake-air temperature of an internal-combustion engine, especially a supercharged internal-combustion engine, with a temperaturedependent resistor coated on a thin wafer of insulating material (12), preferably in a thinfilm process, and designed as a meandering resistance surface (13), the contacting points (14) being connected to the meandering resistance surface (13)‘via conductor tracks (15,16) likewise arranged on the wafer of insulating material (12), the meandering resistance surface (13) and partially the conductor tracks (15,16) being covered with a first protective layer (20) not masking the contacting points (14), the contacting points (14) being covered by a mounting (21) serving for the mechanical fastening of the wafer of insulating material (12) in the housing of the temperature sensor, the protective layer (20) and the mounting (21) overlapping one another in the region between the contacting points (14) and the meandering resistance surface (13), and that the limiting edge (22) of the mounting (21) facing the meandering resistance surface (13) being at least half the length (19) of the meandering resistance surface (13) distant from this meandering resistance surface (13), characterised in that the contacting points (14) are more than the length of the meandering resistance surface (13) distant from the meandering resistance surface (13), in that the mounting (21) consists of a second protective layer which is different from the first and in which the contacting points (14) are embedded, in that the temperaturedependent resistor on the wafer of insulating material (12) is incorporated in a two-part housing (1,2) made of insulating material, and in that one of the two parts contains connecting tongues (6) which are provided by injection and by means of which the conductor tracks (15,16) are soldered to the contacting points (14).

## Revendications

Capteur de température rapide pour saisir la température de l'air d'admission d'un moteur à combustion interne, en particulier d'un moteur à combustion interne suralimenté, comportant une résistance, fonction de la température, rapportée, de préférence en technique des couches minces, sur une plaquette de matériau isolant (12) et exécutée comme résistance plane en forme de grecques (13), étant précisé que les points de connexion (14) sont reliés à la résistance plane en forme de grecques (13) par l'intermédiaire de circuits conducteurs (15, 16) également disposés sur la plaquette de matériau isolant (12) et que la résistance plane en forme de grecques (13) et, partiellement les circuits conducteurs (15, 16) sont recouverts d'une première couche de protection (20) qui ne recouvre pas les points de connexion (14), étant précisé que les points de connexion (14) sont recouverts d'un support (21) qui assure la fixation mécanique de la plaquette de matériau isolant (12) dans le boitier du capteur de température, étant précisé que la couche de protection (20) et le support (21) se recouvrent dans la zone située entre les points de connexion (14) et la résistance plane en forme de grecques (13) et étant précisé que la bordure (22), côté résistance plane en forme de grecques (13), du support (21) est à une distance de la résistance plane en forme de grecques (13) d'au moins la moitié de la longueur (19) de cette résistance plane en forme de grecques (13),
caractérisé en ce que les points de conn exion (14) sont à une distance de la résistance plane en forme de grecques (13) supérieure à la longueur de la résistance plane en forme de grecques (13); en ce que le support (21) est constitué d'une deuxième couche de protection, différente de la première, dans laquelle sont noyés les points de connexion (14); en ce que la résistance, fonction de la température, qui se trouve sur la plaquette de matériau isolant (12) est montée dans un boitier de matériau isolant (1, 2) constitué de deux parties; et en ce que l'une des deux parties contient des lamelles enfichables (6) encastrées par injection auxquelles les circuits conducteurs (15, 16) sont soudés aux points de connexion (14).

FIG.1

FIG.2

FIG.3

## FIG. 4

## FIG. 5